Europäisches Patentamt

European Patent Office

Office européen des brevets

(11) Publication number: **0 475 320 A2**

# EUROPEAN PATENT APPLICATION

(21) Application number: **91115205.6**

(22) Date of filing: **09.09.91**

(51) Int. Cl.5: **H04N 9/73**

(30) Priority: **09.09.90 CN 90107671**

(43) Date of publication of application:
**18.03.92 Bulletin 92/12**

(84) Designated Contracting States:
**DE FR GB**

(71) Applicant: **YUNNAN TV FACTORY**
**153 Dongfengdonglu**
**Kunming, Yunnan Province(CN)**

(72) Inventor: **Yang, Yanhua**
**The Living Ouarters of Yunnan TV Factory,**
**153**
**Dongfengdonglu, Kunming, Yunnan**
**Province(CN)**
Inventor: **Li, Ruihong**
**The Living Ouarters of Yunnan TV Factory,**
**153**
**Dongfengdonglu, Kunming, Yunnan**
**Province(CN)**

(74) Representative: **Goddar, Heinz J., Dr. et al**
**FORRESTER & BOEHMERT**
**Franz-Joseph-Strasse 38**
**W-8000 München 40(DE)**

(54) **Method and apparatus for automatically adjusting dynamic color temperature of color TV equipments.**

(57) The present colour TV equipments adopt single fixed white-balance colour-temperature reference programme and equipment which can not give consideration to various disadvantages in image reproducing result. The method and the apparatus adopted in this invention can correct a colour TV equipment to the dynamic colour-temperature state using the applicable range alonge the Planckian locus colour-temperature band as white-balance colour-temperature parameter region and make the corresponding relation between hue--colour-temperature parameters meet the requirements of the optimum image reproducing result. Therefore, the reproducing results and the quality of general appearance of a colour TV picture are improved after they are used. And it is possible to produce or improve colour TV equipments with a lower cost.

chrominance channel circuit $C_0$ for TV equipment

$O_{02}$  $O_{01}$

$I_{60}$ $I_{70}$ $I_{80}$

$I_{01}$

$I_{13}$

the control circuit $C_3$
of colour-tempera-
ture state R

$I_{36}$
$O_{36}$

automatic correcting
circuit $C_6$ of colour-
temperature state R

$O_{60}$

$I_{23}$

the ident signal
sample circuit $C_1$
of the corresponding
relation between hue  $O_{13}$
and colour-temperature $O_{15}$

$O_{13}$
$I_{14}$
$O_{14}$

the control circuit $C_4$
of colour-tempera-
ture state G

$O_{47}$

$I_{26}$

$I_{47}$

automatic correcting
circuit $C_7$ of colour-
temperature state G

$O_{70}$

$I_{24}$

$I_{27}$

$I_{15}$

the control circuit $C_5$
of colour-tempera-
ture state B

$O_{58}$

$I_{58}$

automatic correcting
circuit $C_8$ of colour-
temperature state B

$O_{80}$

$I_{02}$

$O_{13}$

the sample circuit $C_2$
of colour-tempera-
ture correcting origin
level

$I_{25}$

$I_{28}$

$O_{24}$

$O_{25}$

Fig. 1

The present invention relates to the processing of color TV chrominance, and more particularly to method and apparatus for automatically adjusting dynamic color temperature of color TV equipments such as picking-up equipment, transmitting equipments, receiving equipments and playing equipments.

The color-temperature process of the existing clour T.V. equipments uses uni-fixation way, that is, the uni-fixation white colour temperature reference standard is used for seting up the white balance of a colour T.V. picking-up equipment or receiving equipment and the equipment work state at the same time is used to relatively determine the functional relation between the chrominance signal input and output in a chrominance channel circuit, and the functional relation will remain unchanged when the equipment processes any white or now-white image signal. Up to now, many T.V. technology circles from different countries in the world are still not in agreement on the point about the sampling locus of above uni-fixation colour temperature reference standard. The standard white light recommended presently by CIE, the Comiittee of International Emittance is D65 white light with relative colour temperature of 6504K. This standard is used in present colour T.V. system of PAL and SECAM. And another standard of C white light with relative colour temperature of 6770K is used in NTSC system. A standard of D93 with relative colour temperature of 9300K is used in some countries. In our country, the standard white light for clour T.V. Broadcasts is D65, but there is stipulation on that "the white colour temperature to be set up in production of colour T.V. receiver may be stipulated by the professional standard according to subjective evaluation". In practice and similar to foreign enterprises, the standard is set at D65 in some enterprises or D93 in other enterprises (hereinafter abbreviated as D65 set or D93 set). Because the D65, D93 standards have their own advantages, there is this kind of phenomenon that the standard can not be unified. In systems of television packup and receivng, a colour-temperature is usually chosen to be regular white colour-temperature standard now, and usually D65 or D93 (5400K for pickup equipment) is chosen. According to the condition shown by receiving equipments, none of D65, D93 or 5400K can give consideration to the reproducing effects of various images. They have their own qualititative range and inferior faulty range separately. When reproducing white colour, D93 equipment appears quite white and very clean. When reproducing a natural landscape in which there are mainly the contents of blue and green colour, it appears a good scenery and depth of field, plentiful stratification, distinct picture, bright coloured and more lifelike. But when reproducing the colour of skin, it appears dark green sometimes. When reproducing a person's feature, it appears more stiff. When reproducing red colour, it appears over-purple sometimes. When reproducing the clour of skin, the D65 equipment appears ruddy and soft. When reproducing red colour, it appears bright and lifelike. But when reproduce white colour, it appears over-red. When reproducing a natural landscape in which there are mainly the contents of blue and green colour, it appears withered and yellow and looks like the scenery being covered with a layer of brown dust sometimes---the "sometime" mentioned above means mainly the things when there are not much differences among the ratios which every primitive colour holds. The above conclusion can be supported by the results obtained in the first chinese meeting comparing and assessing the quality of colour T.V. receivers held in 1987. During the comparing and assessing, its published evaluating report points out: "It is satisfactory that D65 white colour-temperature reproduces the colour of skin. If the white colour temperature has some deviation, an obvious difference in the colours of skin will occur so that the adjusting of white colour temperature has an important bearing on receivng a colour picture," "On the condition of the same brightness, 9300K white colour temperature has more bright sense than 6500K white colour temperature, so that when receiving landscape, the sample equipments of 9300K colour-temperature had higher marks than those of 6500K colour-temperature because they appeared good scenery and depth of field, distinct picture and bright coloured." The technical summary of the evaluation points out again; "When reproducing memory colours, such as the colour of skin and background, D65 white colour temperature is beyond comparison with the other colour temperature but when reproducing the picture in which there are mainly the contents of blue and green colour, it appears less bright-coloured level than higher colour-temperature.... (relative to D65) if the colour temperature is much higher, the result reproducing the colour of skin will be wrose."

The main reason forming above state is as follows:

1. For the same image signal, the ratios of three primary colours of reproducing image from different systems which have different reference standards of colour temperature are different. The D65 receiver offers 41.4% red component more than the D93 receiver. But the D65 receiver offers 14.4% blue component less than the D93 receiver.

Make the affine transofrmation to transfer the CIE chrominance figure from XYZ system to the three base colour system which is formally used in the technical standards in our country. Suppose that the coordinate in the XZ system for any colour amount (F) is $(X_F, Y_F, Z_F)$ and the coordinate in the RGB system for the same colour amount (F) is $(r_F, g_F, b_F)$, then we can get the following formula of coordinate transformation:

$$\begin{pmatrix} r_F \\ g_F \\ b_F \end{pmatrix} = \begin{pmatrix} 2,0608 & -0,9374 & -0,3201 \\ -1,1415 & 2,2094 & 0,0489 \\ 0,0807 & -0,2720 & 1,2712 \end{pmatrix} \begin{pmatrix} X_F \\ Y_F \\ Z_F \end{pmatrix}$$

Bring the coordinates (0,313, 0,329, 0,358), (0,281., 0,311, 0.408) in the XYZ system for D65 and D93 into above formula, we can get the following relative coordinates in the RGB system;

$$(D65) = \begin{pmatrix} 0.222 \\ 0.387 \\ 0.391 \end{pmatrix} \qquad (D93) = \begin{pmatrix} 0.157 \\ 0.386 \\ 0.457 \end{pmatrix}$$

Therefore the reference white of D65 or D93 may be founded in the following mixed form:

(D65) = 0.222(R) + 0.387(G) + 0.391(B)

(D93) = 0.157(R) + 0.386(G) + 0.457(B).

From above two formulas, we can see that, when two T.V. receivers display same pictures, i.e., when their matrix circuits get same drive voltage, their output voltages are different so that the ratio of base colour in the colour appearing on the viewing screen is also different, wherein the red component in D65 receiver is 41.4% more than that in D93 receiver {(0.222-0.157)/0.157}, the blue component in D65 receiver is 14.4% less than that in D93 receiver {(0.457-0.391)/0.457} and the green component in both of D65 and D93 receiver may be considered as the same because there is only 0.2% difference.

2. The influence from illumination source to the chrominance of object is extensive, but the colour temperature from different light sources disperses from 2000K to 28000K. The scenery objects appearing in many conditions are actually exposed under the sky light. And the colour temperature from the sky light is usually higher than 6500K, for example, the colour temperature for the blue sky is from 10000K to 12000K and for the blue sky with thin clounds, from 14000K to 22000K. Therefore, the D65 can not represent the chrominance of object under above conditions. From the same reason, it is also impossible for D93 to represent the chrominance of object directly irradiated from some artificiat light sources or sunlight.

The object of the present invention is to provide a method and an apparatus with them the colour-temperature parameters of white balance in the equipment may be dynamically dealt with and worked in the dynamic colour-temperature state which is set according to the qualitative range of repdouced picture and avoids the inferior faulty range of reproduced picture. Therefore, they can eliminate the intrinsic disadvantage from which it is difficult, for present T.V. equipments designed according to the uni-fixation white balance scheme of colour-temperature reference standards, to take account of all the reproducing effects of picture, therefore can make the reproducing effects of picture more lifelike and the subjective evaluating effects more perfect for the colour T.V.

A method for automatically adjusting dynamic colour temperature of colour TV equipments is characterized in that:

a) the applicable range along the Planckian locus color-tempeature band, (i.e. 2000K-28000K mentioned below, especially the range of 5400K-9300K which error should be less than or equal to +27 MPCD), is acted as the reference standard of dynamic colour temperature of the white-balance colour-temperature parameter for the dynamic colour temperature condition of colour T.V. equipment, (that is a kind of work condition which white-balance colour-temperature parameters are in the dynamic characters for the equipment in which and is relatively determined by the functional relation between the values of input and output of the chrominance signal remaining stationary when the equipment reproduces any hue image), and,

b) according to the instantaneous hue characters of the image element points in every sacnning line of the image at 52 $\mu$s forwardstroke, a relative automatic apparatus is used for automatic adjusting, and,

c) when the chrominance channel circuit is input with warm colour chrominance signal (i.e., the primary colour structure is that R signal level is greater than G signal level and B signal level), and on the condition of accurate design, all or some portions of the low colour temperature region in the range between 2000k and 9300K, especially 5400K and 9300K or 6504K and 9300K, is adopted, but white on condition that an approaximate design is allowed, one or several points in the previous region are used as dynamic colour-temperature standard called bottom colour-temperature standard Dl, and,

d) when chrominance channel circuit is input with the chrominance signal of the other hue signal and on the condition of accurate design, the range between the previous bottom colour-temperature standard Dl (in which the upper limit of Dl is adopted when Dl is in th epart of the previous continuous ragion or several point) and 28000K, especially and 9300K or some part region among the ranges, is used, but while on condition that an approaximate design is allowed, one or several points in the previous region are used as dynamic colour-temperature standard called top colour-temperature standard $D_H$, and,

e) on the condition of accurate design, the upper limit of the bottom colour-temperature standard $D_L$ must be fixed at the lower limit of the top colour-temperature standard, (above stipulations about the relation between hue and colour-temperatures parameters are called correspondence principles of hue and colour-temperature parameters) and.

f) in course of adjusting dynamic colour-temperature state automatically and when the white-balance colour-temperature parameter is adjusted from arbitrary value $K_0$ (corresponding normalized primary colour quantities are Ro, Go, Bo and brightness is Yo) to arbitrary value $K_1$ which is less than $K_0$ - (corresponding normalized primary colour quantities are $R_1$, $G_1$, $B_1$ and brightness is $Y_1$), the following request should be satisfied:

1) the deviation of the pionts $(X_0, Y_0)$, $(X_1, Y_1)$ on a CIE chrominance chart which correspond to the points $(R_0\ G_0\ , B_0)$, $(R_1, G_1, B_1)$ in RGB colour space from teh corresponding points $K_0$, $K_1$ in the Planckian locus should separately be less than or equal to ±27 MPCD,

2) except slunt treatment, the following inequality should be satsfied:

$$O \leq |Y_1 - Y_0| = |0.3.(R_1 - R_0) + 0.59(B_1 - B_0) + 0.11(G_1 - G_0)| \leq 0.15$$

The apparatus for automatically adjusting dynamic colour temperature of colour TV equipments is characterized in that:

the input interface $I_{01}$ of chrominance signal sample, the output interface $O_{13}$ of the ident signal R of colour-temperature region, the output interface $O_{14}$ of the ident signal G of colour-temperature region and the output interface $O_{15}$ of the ident signal B of colour-temperature region are installed in the sample ident signal circuit $C_1$ with the corresponding relation for hue to colour-temperature, wherein the previous output interefaces $O_{13}$, $O_{14}$, $O_{15}$ are separately connected with the input interface $I_{13}$ of the ident signal 'R of colour- temperature region in the control circuit $C_3$ of colour-temperature state R, the input interface $I_{14}$ of the ident signal G of colour-temperature region in the control circuit $C_4$ of colour-tempeature state G and the input interface $I_{15}$ of the ident signal B of colour-temperature region in the control circuit $C_5$ of colour-temperature state B, in which the output interface $C_{36}$ of R control signal in R control circuit $C_3$ the output interface $O_{47}$ of G control signal in the G control circuit $C_4$ and the output interface $O_{58}$ of B control signal in the B control circuit $C_5$ are separately connected with the input interface $I_{56}$ of R control signal in the automatic adjusting circuit $C_6$ of colour-temperature state R, the input interface $I_{47}$ of G control signal in the automatic adjusting circuit $C_7$ of colour-temperature state G, and the input interface $I_{58}$, of B control signal in the automatic adjusting circuit $C_8$ of color-temperature state B, wherein an interface $O_{80}$ adjusting the channel of color-temperature R, which will be connected with a channel circuit $C_0$ to be modulated, is installed in the previous R automatic adusting circuit $C_6$, an interface $O_{70}$ of the automatic adjusting channel of colour-temperature state G, which will be connected with the channel of colour-temperature state G, which will be connected with the channel circuit Co to be modulated, is installed in the previous G automatic adjusting circuit $C_7$, and an interface $O_{80}$ adjusting the channel of colour-temperature state R will also be connected with the channel circuit Co to be modulated, is installed in the previous B automatic adjusting circuit $C_8$, and furthermore, an input interface $I_{02}$ of chrominance or brighness signal is installed in the sample circuit $C_2$ of colour-temperature adjusting origin level, in which an output interface $O_{26}$ of adjusting origin level R, an output interface $O_{24}$ of adjusting origin level G and an output interface $O_{25}$ of adjusting origin level B in the sample circuit $C_2$ are separately connected with an input interface $I_{26}$ of adjusting origin level R in the previous R automatic adjusting circuit $C_6$, an input interface $I_{27}$ of adjusting origin level G in the previous G automatic adjusting circuit $C_7$ and an input interface $I_{28}$ of adjusting origin level B in the previous B automatic adjusting circuit $C_8$ as well as are separately connected with an input interface $I_{23}$ of adjusting origin level R in the previous R control circuit $C_3$, an input interface $I_{24}$ of adjusting origin level G in the previous G control circuit $C_4$ and an input interface $I_{25}$ of adjusting origin level B in the previous B

control circuit $C_5$.

Upon condition that circuits $C_4$ and $C_7$ as well as the input interfaces $I_{26}$ and $I_{28}$ of the adjusitng origin levels R and B can be neglected, and when the adopted bottom colour-temperature standard $D_L$ and the adopted top colour-temperature standard $D_H$ are separately set in the coninuous sections of 5400K-7900K or 6500k-7900K and 7900K-9300K or 7900K-10000K in Planckian locus band,

a. the circuit $C_1$ means: the positive pole of a voltage regulator diode $D_1$ is used as R input terminal $I'_{01}$ of chrominance signal input interface $I_{01}$, the negative pole of $D_1$ is used as the output interface $O_{13}$ of ident signal R of the colour-temperature region and is connected with an end of a resister $R_1$, the other end of $R_1$ is put to earth, the positive pole of a voltage regulator diode $D_3$ is used as G input terminal

$$I''_{01}$$

of chrominance signal input interface $I_{01}$, the negative pole of $D_3$ is connected with a non-central terminal of a potentiometer $W_2$, the other non-central terminal of $W_2$ is connected with an end of a potentiometer $R_7$, the center terminal of $W_2$ is connected with the positive pole of a diode $D_5$, the other end of $R_7$ is put to earth, the positive pole of a voltage regulator diode $D_2$ is used as B input terminal

$$O'''_{01}$$

of chrominance signal input interface $I_{01}$, the negative pole of $D_2$ is connected with an non-central terminal of a potentiometer $W_1$, the other non-central terminal of $W_1$ is connected with a terminal of a resistor $R_6$, the centre terminal of $W_1$ is connected with the positive pole of a diode $D_4$, the other end of $R_6$ is put to earth, the terminal where the negative pole of $D_4$ is connected with the negative pole of $D_5$ is used as the output terminal $O_{15}$ of ident signal B of the colour-temperature region,

b. above circuit $C_2$ is compounded into above circuit $C_1$, i.e. the circuit $C_2$ consists of voltage regulator diodes $D_1$, $D_2$, $D_3$, potentiometers $W_1$, $W_2$, diodes $D_4$, $D_5$ and is in the same connection way from above circuit $C_1$, here, the positive poles of $D_1$, $D_2$ and $D_3$ are set as the R. G. B input terminals $I'_{02}$, $I_{02}''$ and

$$I'''_{02}$$

of chrominance or luminance signal input interface $I_{02}$, and , the negative pole of $D'_1$ is set as the R output interface $O_{23}$ of adjusting origin level, the negative pole of $D_4$, is set as the B output interface $O_{25}$ of adjusting origin level.

On condition that circuit $C_4$ and $C_7$ as well as the input interfaces $I_{26}$ and $I_{28}$ of the adjusting origin levels R and B can be neglected, when the adopted bottom colour-temperature reference standard $D_L$ and the adopted top colour-temperature reference standard $D_H$ are separately set in the continuous sections of 5400K-7900or 6500K-7900K and 7900K-10000K in Planckian locus band, above control circuit $C_5$ of colour-temperature R means: the bases of two NPN transistor $BG_{11}$, $BG_{21}$ are connected to each other and used as the input interface $I_{13}$ of ident signal R of the colour-temperature region and the input interface $I_{23}$ of adjusting origin level R, the emitter of $BG_{11}$ is connected with the collector of a PNP transistor $BG_{12}$ and used as a terminal $O'_{36}$ of the output interface $O_{36}$ of R control signal as well, the colletor of $GB_{11}$ is connected with the base of $BG_{12}$ and the emitter of $BG_{12}$ is connected with the emitter of a PNP transistor $BG_{22}$ and used as the second terminal

$$O''_{36}$$

of the output interface $O_{36}$ as well, the base of $BG_{22}$ is connected with the collector of $GB_{21}$, the colletor of $BG_{22}$ is connected with the emitter of $BG_{21}$ and used as the third terminal

$$O'''_{36}$$

of the output interface $O_{36}$.

On condition that circuits $C_4$ and $C_7$ as well as the input interfaces $I_{26}$ and $I_{28}$ of the adjusting origin levels R and B can be neglected, when the adopted bottom colour-temperature reference standard $D_L$ and the adopted top colour-temperature reference standard $D_H$ are seperately set in the continuous sections of 5400K-7900K or 6500-7900 and 7900K-9300K or 7900K-10000K in Planckian locus band, above control circuit $C_5$ of colour-temperature B means: the bases of two NPN transistor $BG_{31}$, $GB_{41}$ are connected to each other and used as the input interface $I_{15}$ of ident signal B of the colour-temperature region and the input interface $I_{25}$ of adjusting origin level B, the emitter of $BG_{31}$ is connected with the collector of PNP transistor $BG_{32}$ and used as a terminal $O'_{58}$ of the output interface $O_{58}$ of B control signal as well, the collector of $BG_{31}$ is connected with the base of $BG_{32}$, the emitter of $BG_{32}$ is connected with +12V power source, the emitter of a PNP transistor $BG_{42}$ is used as the second terminal $O''_{58}$ of the output interface $O_{58}$, the base of $BG_{42}$ is connected with the collector of $BG_{41}$, the collector of $BG_{42}$ is connected with the emitter of $BG_{41}$ and used as the third terminal

$$O_{58}^{'''}$$

of the output interface $O_{58}$. When the primary colour driver matrix circuit is corrected, it is used as Y input terminal.

On condition that circuits $C_4$ and $C_7$ as well as the input interfaces $I_{26}$ and $I_{28}$ of the adjusting origin levels R and B can be neglected, when the adopted bottom colour-temperature reference standard $D_L$ and the adopted top colour-temperature reference standard $D_H$ are separately set in the continuous sections of 5400K-7900K or 6500K-7900K and 7900K-9300K or 7900K-10000K in Planckian locus band,

a. above automatic adusting circuit $C_6$ of colour-temperature state R means: a terminal of a resistor $R_4$ is used as a teminal $I'_{36}$ of the input interface $I_{36}$ of R control signal, the other terminal of the $R_4$ is put to earth, a terminal of a risistor $R_2$ is used as the second teminal

$$I_{36}^{''}$$

of the input interface $I_{36}$, the other terminal of the $R_2$ is used as the B automatic adjusting channel interface $O_{60}$ of colour-temperature state, the second terminal

$$O_{36}^{''}$$

is also connected with the first terminal $I'_{01}$ of the input interface $I_{01}$ in the previous sample circuit $C_1$, a terminal of a resistor $R_5$ is used as the third terminal

$$I_{36}^{'''}$$

of the input interface $I_{36}$, the other end of $R_5$ is put to earth.

b, above automatic adjusting circuit $C_8$ of colour-temperature state B means: the terminal, which has been used as $I'_{36}$ and is from the same resistor $R_4$ in the above circuit $C_6$ is also used as a terminal $I'_{58}$ of the input interface $I_{58}$ of B control signal, the other terminal of $R_4$ is put to earth, a terminal of a risistor $R_5$ is used as the second terminal $I''_8$ of input interface $I_8$, the other terminal of $R_5$ is used as the B automatic adjusting channel interface $o_{80}$ of colour-temperature state and is also connected with the third terminal

$$I_{01}^{'''}$$

of the input interface $I_{01}$ in the previous sample circuit $C_1$, the terminal, which has been used as

$$I_{36}^{'''}$$

and is from the same resistor $R_5$ in above circuit $C_6$ is also used as the third terminal

$$I_{58}'''$$

of input interface $I_{58}$ the other terminal of the $R_5$ is put to earth, C, first terminal $I_{01}'$ ---that is the interface $O_{60}$ and the first teminal $I_{02}'$ of the interface $I_{02}$, the second terminal

$$I_{01}''$$

---that is the second terminal $I_{02}''$ of interface $I_{02}$ and the third terminal

$$I_{01}'''$$

---that is the interface $O_{80}$ and the third terminal

$$I_{02}'''$$

of the interface $I_{02}$ of above adjuster interface $I_{01}$ are separately connected with the final-stage transistor emitters of the R, G, B matrix circuits of a adjusted receiver, a positive 12V power source and the earthed terminal are separately connected with the +12V terminal of the decoding matrix circuits and the earthed terminal of the adjusted receiver.

So, the method and apparatus according to the invention means, an instantaneous chrominance signal is gotten out of or a brignteness signal is again gotten out of from a proper position of a TV equipment by means of the ident circuit of corresponding relation between hue and colour-tempeature and the sampling circuit of origin level for colour-temperature correction, then the corresponding relation between hue and colour-temperature is distinguished according to the above selected corresponding principle between the hue and colour-temperature parameters, the correcting origin level which is required to set up dynamic correction for various primary colours R, G, B is get out of it, then the ocrresponding control signal emitted by means of colour-temperature control circuit according to ident signal of the colour-temperature range and the signal of correcting origin level, which are delivered by the above circuit, is applied to colour-temperature automatic correcting circuit. The control signal will correct the equipment to the dynamic colour-temperature state by means of the installed colour-temperature channel and always control the white balance color-temperature parameter in the stated dynamic range and submit to the state corresponding relation between the hue and colour-temperature parameters. On condition that an approximate design is allowed---for example, in the plan about the selection of R, G, B primary colours in Chaia now, the above calculation shows that the ratio between the G contents of D and D only differs by 0.2% so that they can be considered to be equal--- and the elements need to be saved, the subcircuits and the signal distribution of the adjuster can be cancelled partly---for example, in some implementations, the G control and the adjusting circuit the origin level inputs for the control circuti and the apparatus circuit etc. are left out---it is possible to share. mutually or partly, the elements and the signal chnnels so that two or several block circuits can be compounded or partly be compounded as one.

When the apparatus is to be used, firstly, it is switched into a colour TV receiver in above requirements, white signals are input into the receiver and the potentiometers $W_1$ , $W_2$ are corrected to the state electrically directly connecting $D_2$ with $D_4$ and $D_5$ with $D_6$ ---at this moment, $BG_{11}$, $BG_{12}$, $BG_{21}$ and $BG_{22}$ are cut-off and $BG_{31}$, $GB_{32}$ $BG_{41}$ and $BG_{42}$ are switched on. Then, the white balance of the apparatus is corrected according to the reference white in relative colour-temperature 9300K. The present joint currents of final emitters in matrix circuits R and B are separately supposed to be $I_R$, $I_B$ and $W_1$, $W_2$ are again corrected so as to let the colour-temperature region ident voltage $V_B$ of $I_{15}$ terminal be about 0.1 V higher than that of $I_{13}$ terminal. In this way, when the receiver receives a non-warm colour image signal, that is $V_R \leqq V_B$ and $V_R \leqq V_G$, the matrix circuit maintains above white balance dynamic colour-temperature parameter onto 9300K work state---only when $V_R$ - $V_B$ = 0.1-OV, the work state is in 7900K-9300K. When the receiver recieves a warm colour image signal, that is $V_R > V_B$ and $V_R > V_G$, $BG_{11}$, $BG_{12}$, $BG_{21}$ and $BG_{22}$ are switched on and $BG_{31}$, $BG_{32}$, $BG_{41}$ and $BG_{42}$ are cut-off so that the final emitter current, which is approximately equal to the collector current, in R matrix circuit, increases $\Delta I_R$ and the final emitter current, which is approximately equal to the collector current, in B matrix circuit, also increases $\Delta I_B$. The values of

the increase $\Delta I_R$ and $\Delta I_B$ is depended on the selection of circuit parameters. When a group of parameters are selected so that $\Delta I_R/I_R = 41.4\%$, $\Delta I_R/I_B = 14.4\%$, the receiver will change of from 9300K dynamic colour-temperature state to 6504K dynamic colour-temperature state---only when $V_R - V_B = 0$-0.1V, it is in 6504K-7900K state. Afterwards, any chrominance signals are first sampled by $D_1$, $D_3$, $W_2$, $D_2$, $W_1$ separately. After G, B signals are compared by means of $D_4$, $D_5$, one which has higher level among them is input to $I_{15}$ and compared with R signal at $I_{13}$, and then the one which has a higher level between them is switched on a relative circuit so that a relative resistor is put into the matrix circuit to operate a stated correction---where correcting origin level is determined by the regulated voltages $D_1$, $D_2$, $D_3$.

An advantage of this invention is: on condition that the chrominance and luminance of image details are assured not to be distorted or not to be distorted in the main, the optimum white balance colour-temperature parameters corresponding to various hues are selected to give consideration to TV equipments having good reproducing results for various images.

Another advantage of this invention is to provide an error structure having good suitability. In fact, because the colour TV is a kind of image approximately reproducing technique---for example, the bandwidth of chrominance signal is limited in 1.3MHz what is called as large area colouring programme for compatibility, such as the intrinsic large error eare for $D_{65}$, $D_{93}$ references ---which is subordinated to characters of human vision and results of subjective evaluation to a great extent with the addition of the effects of various factors producing when signals transmit, it is not possibel to avoid errors. Eliminating inferior errors which can make image quality decrease apparently as more as possible and property controlling non-inferior errors which do not make image quality decrease apparently are valuable. The errors structure characteristics of the automatic correcting method in this invention are as follows:

Firstly take the fidelity combining the distortionless of chrominance parameter with the distrotionless of the visual result as suitable project to determine the applicable range in Planckian locus band as colour-temperature dynamic range so that the findelity is raised.

Secondly, take the subjective evaluating results as suitable project to determine the allowable deviation direction in "warm hue warm colour-temperature" and "cold hue cold colour-temperature".

This kind of error structure prevents the TV set from the inferior region of the intrinsic reproducing image in existing uni-fixation colour-temperature reference programme. Even it still has proper errors, the results appear that the skin colour appears slightly red, white colour appears slightly blue, green mountains appear much green and blue water appears much blue and do not appear disagreeable. The effects of errors are limited in the range which can be accepted by a subjuctive evaluation. That has a similar function with the tolerance basic shaft system and the correlation tolerance. For the intrinsic infoerior errors of input signal, this kind of error structure can produce offsetting or even correcting results and is analogous to a kind of prestressing force.

In this invention, G correcting way is neglected in some of the embodiments. This kind of neglect does not influence the fidelity of primary colour ratio in the main because the difference of the G ratios between $D_{93}$ and $D_{65}$ is only 0.2%. When the apparatus makes a receiver correct $D_{93}$ state (assuming present values of every primary colours to be 1, that is $R_{93} = G_{93} = B_{93} = 1$, and brightness to be $Y_{93}$) be $D_{65}$ state (assuming present values of very prmary colours to be $R_{65}$, $G_{65}$, $B_{65}$ and brightness to be $Y_{65}$) according to the brightness formulas in chromatics theory,

$$Y_{93} = 0.30x1 + 0.59x1 + 0.11 = 1$$

$$Y_{65} = 0.30x1.414 + 0.59x1 + 0.11x0.856 = 1.1$$

this makes the brightness value increase 10% (when hue changes, the brightness could not increase more because of the action limited by $R_2$). But, just as what was shown in the Evaluating Report of the First Conference Comparing and Appraising the Quality of Colour TV Sets in China, "under the condition of same brightnesses, the brightness impression of 9300K white colour-temperature is more than that of 6500K white colour-temperature." Therefore, increasing brightness by about 10% under the state of $D_{65}$ colour-temperature just has a good compensation for the short of visual brightness of warm colour image so as to reach a balacne (because of the actions of $D_1$, $D_2$ and $D_3$, the black level reference as a correcting origin is assured of always remaining steady during dynamic correcting). While black and white image is shown because $V_R = V_B$, the dynamic colour temperature state returns to 9300K and the brightness returns to the origin state. If it is required to let the brightness value always remain constant, the only need is to add G control correcting circuit (seeFig.3) and properly select the parameters so that R increasing rate is 0.285, G increasing rate is 0.091 and B increasing rate is 0.222 when the dynamic colour temperature state changes from $D_{93}$ to $D_{65}$.

The apparatus according to the invention is relatively independent and the numbers of components are not too many. Except for potentiometers, all components are able to be integrated into a small piece of integrated circuit with 5 or 7 lead-out terminals. The integrated device is installed in a proper place of the tail plate of TV picture tube. After it is corrected simply, it will be possible to accomplish above functions. It is not only convenient in the production of large sccale, but also possible of being used to improve on a using TV set without changing the origin circuit anymore. The apparatus can be made by discrete elements or compounded in the present circuit. For the TV productions possessing good consistency, the correcting potentiometers $W_1$ and $W_2$ can be neglected and it is not necessary to be corrected after the circuit is added and welded on it.

What is mentioned above is proved by the test in measuring the circuit and the watching sample-equipment test. So it achieves the aim of this invention.

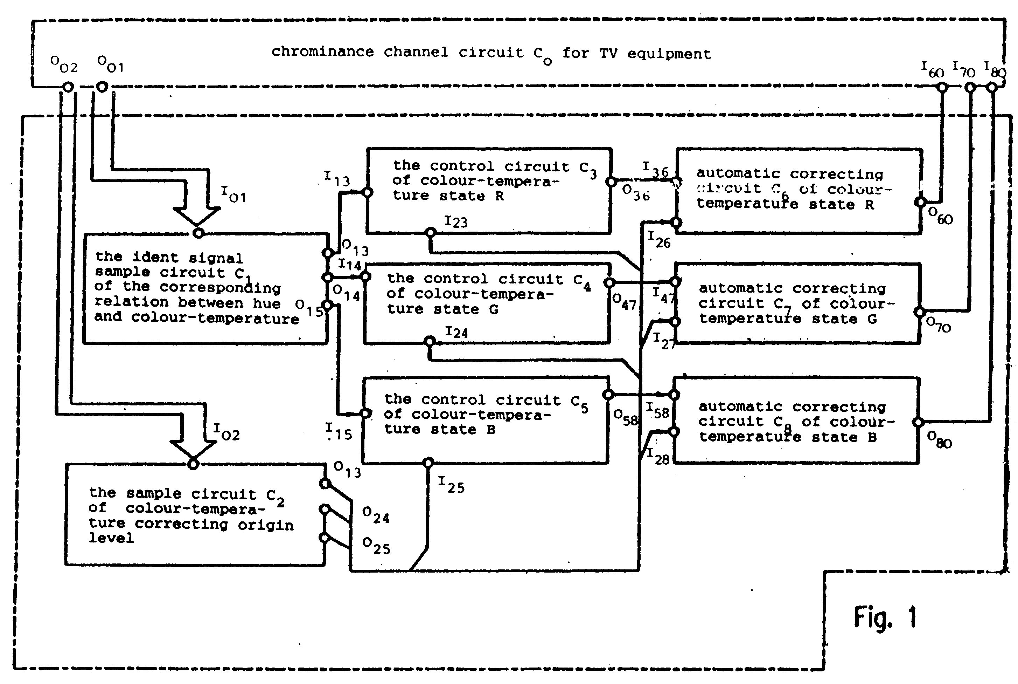

Figure 1 is the apparatus for automaitcally adjusting dynamic colour temperature of colour TV equipments;

Figure 2 is the electrical illustrative diagram of one embodiment of the apparatus according to the invention;

Fig. 3 is the electrical illustrative diagram of another embodiment of the apparatus according to the present invention;

Fig. 4 is the electrical illustrative diagram of the third embodiment of the apparatus according to the invention.

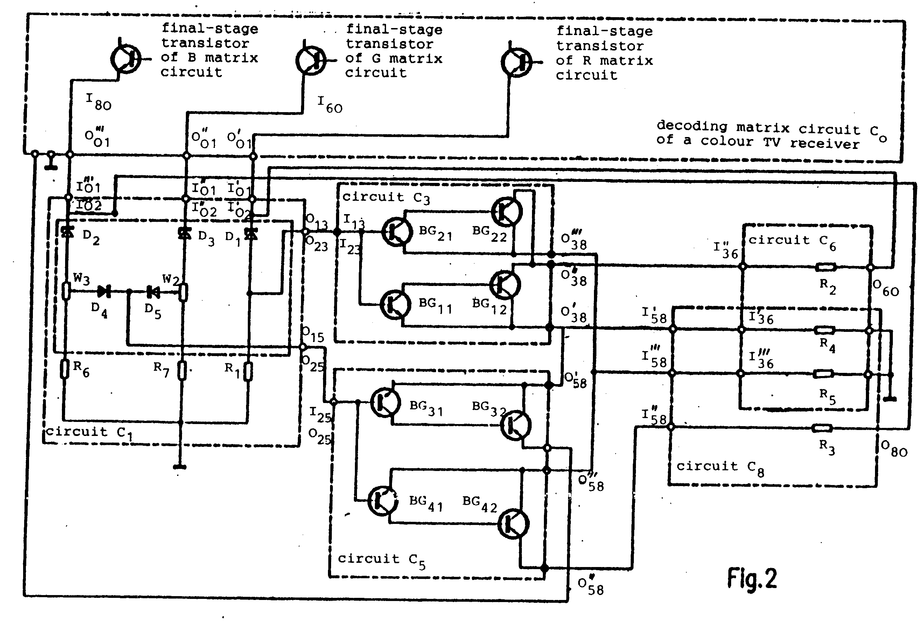

Embodiment 1 (see Fig. 2)

Circuit connecitng mode and relative elements in the apparatus are the same as the circuit connecting mode and relative elements in the above apparatus which is on condition that the circuit $C_4$, $C_7$ and the input interfaces $I_{26}$, $I_{28}$ of adjusting origin levels R, B can be neglected. The ranges selecting the elements of the apparatus are seaprately $R_1$, $R_6$, $R_7$: 10-20KΩ; $R_2$, $R_3$: 500-3.9KΩ, $R_4$ : 2.7-6.8KΩ; $R_5$: 4.7-12 KΩ; $W_1$, $W_2$: 1-2.7 KΩ; Reversal restoring times of D4 and D5 are less than 5ns; low current regulated voltage values of $D_1$, $D_2$, $D_3$ are selected with reference to the average black levels assuring that the primary colour correcting rates for bright or dark image are the same and transistor junction capacity is small; $BG_{11}$-$GB_{44}$ are low power transistors for which $h_{FE}$>50, $f_l$>100MH, and it is best to choose differential symmetry transistors for them.

The operating process of the of the apparatus circuit is stated as above. It has a simple structure and good characteristic and is suitable to be used by a receiver.

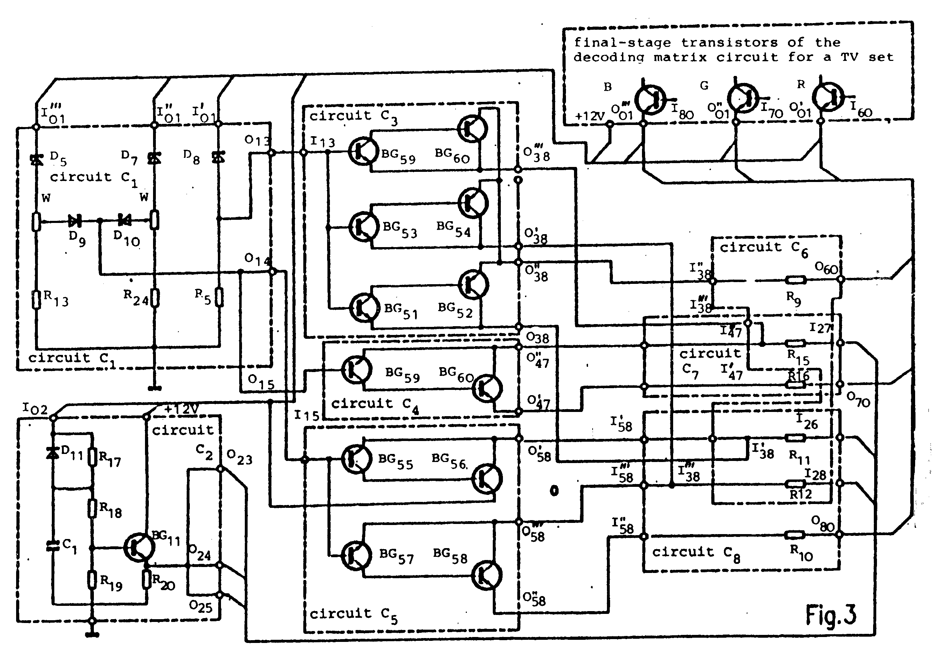

Embodiment 2 (see Fig.3):

It is the apparatus applied to the condition when circuits $C_4$ and $C_7$ are not allowed to be neglected. The embodiment 1 is a simplified case of embodiment 2. There is more accurate colour-temperature correcting origin level in the sample circuit used in embodiment 2, which takes the place of the relative circuit in embodiment 1, than in embodiment 1. The circuit is composed of NPN transistor $BG_{61}$, resistors $R_{17}$, $R_{18}$, $R_{19}$, diode $D_{11}$, capacitor $C_1$, a clamper circuit used to track the random black level. It is added G control circuit $C_4$, which is composed of transistors $BG_{59}$, $BG_{60}$ and G correcting circuit, which is composed of resistors $R_{15}$, $R_{16}$. They are conencted each other as Fig. 3. This circuit separately corrects R, G, B increasing rates to 0.285, -0.091, - 0.222 in $D_{93}$ → $D_{65}$ state. Therefore, it will assure the brightness to reamin constant when $D_{93}$ state is automaticly corrected to $D_{65}$ state as mentioned above.

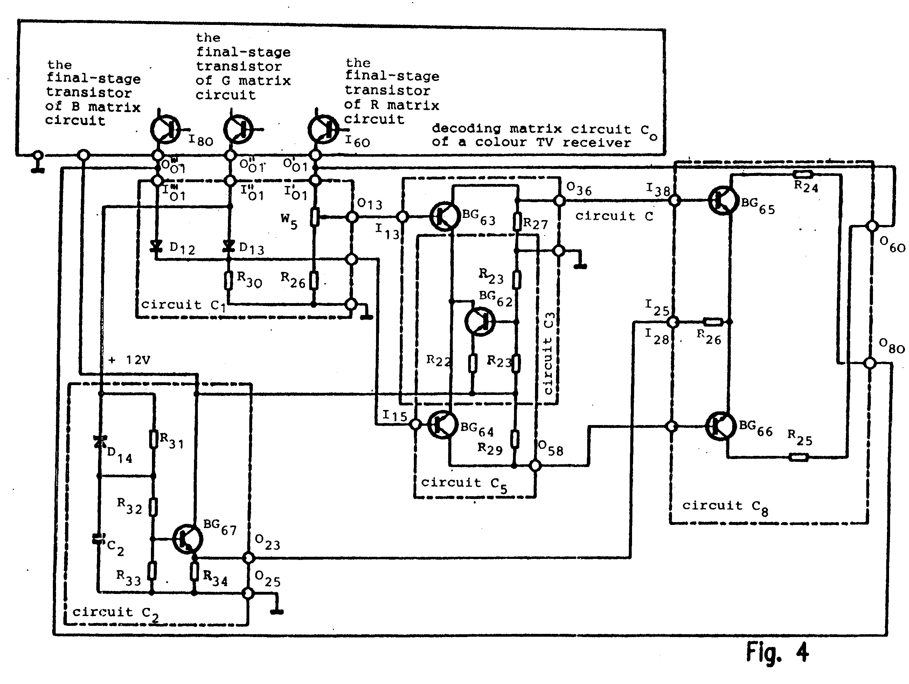

Embodiment 3 (see Fig.4):

It is another circuit mode on condition that $C_4$, $C_7$ circuits are neglected. Its sample circuit $C_1$ is composed of diodes $D_{12}$, $D_{13}$, resistors $R_{26}$, $R_{30}$ and a potentiometer $W_5$. Its sample circuit $C_2$ is composed of a transistor $BG_{67}$, a diode $D_{14}$, a capacitor $C_2$ and resistors $R_{31}$, $R_{32}$, $R_{33}$, $R_{34}$. R and B control circuits $C_3$ and $C_5$ are separately composed of transistors $BG_{62}$, $G_{63}$, $Bg_{64}$ resistors $R_{21}$, $R_{22}$, $R_{27}$ and a transistor $BG_{64}$, resistors $R_{21}$, $R_{22}$, $R_{29}$, in which the two circuits share $BG_{62}$, $R_{21}$, $R_{22}$, $R_{23}$. R and B correcting circuits $C_6$ and $C_8$ are composed of transistors $BG_{65}$, $BG_{66}$, resistors $R_{24}$, $R_{25}$, $R_{26}$, which are also shared by the two circuits. The internal connection is shown in Fig.4. It is connected with the receiver matrix circuit by means of the same methods as embodiment 1.

Embodiment 4:

10

It is a kind of apparatus for automatically adjusting dynamic colour-temperature of colour TV equipment, which characters are that a division device is installed in the sample circuit C of the ident signal of corresponding relation between hue and colour-temperature and the corresponding relation between instantaneous hue and colour-temperature is distinguished according to the corresponding principle of the above selected hue---colour-temperature. When a receiver receives warm images, $V_R/V_G>1$ and $V_R/V_B>1$--- both values represent objective hue characteristic under the circumstance, otherwise, it may be considered that the receiver receives other hue chrominance signal, its feature is using the first colour-temperature region ident signal to control the next field instrantaneous hue.

The features disclosed in the foregoing description, in the claims and/or in the accompanying drawings may, both, separately and in any combination thereof, be material for realising the invention in diverse forms thereof.

## Claims

1. A method for automatically adjusting dynamic colour temperature of colour TV equipments is characterized in that:

   a) the applicable range along the Planckian locus color-tempeature band, (i.e. 2000K-28000K mentioned below, especially the range of 5400K-9300K which error should be less than or equal to $+27$ MPCD), is acted as the reference standard of dynamic colour temperature of the white-balance colour-temperature parameter for the dynamic colour temperature condition of colour T.V. equipment, (that is a kind of work condition which white-balance colour-temperature parameters parameters are in the dynamic characters for the equipment in which and is relatively determined by the functional relation between the values of input and output of the chrominance signal remaining stationary when the equipment reproduces any hue image), and,

   b) according to the instantaneous hue characters of the image element points in every sacnning line of the image at 52 $\mu$s forwardstroke, a relative automatic apparatus is used for automatic adjusting, and,

   c) when the chrominance channel circuit is input with warm colour chrominance signal (i.e., the primary colour structure is that R signal level is greater than G signal level and B signal level), and on the condition of accurate design, all or some portions of the low colour temperature region in the range between 2000k and 9300K, especially 5400K and 9300K or 6504K and 9300K, is adopted, but while on condition that an approaximate design is allowed, one or several points in the previous region are used as dynamic colour-temperature standard called bottom colour-temperature standard Dl, and,

   d) when chrominance channel circuit is input with the chrominance signal of the other hue signal and on the condition of accurate design, the range between the previous bottom colour-temperature standard Dl (in which the upper limit of Dl is adopted when Dl is in th epart of the previous continuous ragion or several point) and 28000K, especially and 9300K or some part region among the ranges, is used, but while on condition that an approaximate design is allowed, one or several points in the previous region are used as dynamic colour-temperature standard called top colour-temperature standard D, and,

   e) on the condition of accurate design, the upper limit of the bottom colour-temperature standard D must be fixed at the lower limit of the top colour-temperature standard, (above stipulations about the relation between hue and colour-temperatures parameters are called corres pondence principles of hue and colour-temperature parameters) and.

   f) in course of adjusting dynamic colour-temperature state automatically and when the white-balance colour-temperature parameter is adjusted from arbitrary value $K_0$ (corresponding normalized primary colour quantities are Ro, Go, Bo and brightness is Yo) to arbitrary value $K_1$ which is less than $K_0$ - (corresponding normalized primary colour quantities are $R_1$, $G_1$, $B_1$ and brightness is $Y_1$), the following request should be satisfied:

   1) the deviation of the pionts $(X_0, Y_0)$, $(X_1, Y_1)$ on a CIE chrominance chart which correspond to the points $(R_0, G_0, B_0)$, $(R_1, G_1, B_1)$ in RGB colour space from teh corresponding points $K_0$, $K_1$ in the Planckian locus should separately be less than or equal to ±27 MPCD,

   2) except slunt treatment, the following inequality should be satsfied:

   $$O \leq |Y_1 - Y_0| = |0.3 \cdot (R_1 - R_0) + 0.59(B_1 - B_0) + 0.11(G_1 - G_0)| \leq 0.15$$

2. An apparatus for automatically adjusting dynamic colour temperature of colour TV equipments is

EP 0 475 320 A2

characterized in that:

the input interface $I_{01}$ of chrominance signal sample, the output interface $O_{13}$ of the ident signal R of colour-temperature region, the output interface $O_{14}$ of the ident signal G of colour-temperature region and the output interface $O_{15}$ of the ident signal B of colour-temperature region are installed in the sample ident signal circuit $C_1$ with the corresponding relation for hue to colour-temperature, wherein the previous output interefaces $O_{13}$, $O_{14}$, $O_{15}$ are separately connected with the input interface $I_{13}$ of the ident signal 'R of colour- temperature region in the control circuit C of colour-temperature state R, the input interface $I_{14}$ of the ident signal G of colour-temperature region in the control circuit $C_4$ of colour-tempeature state G and the input interface $I_{15}$ of the ident signal B of colour-temperature region in the control circuit $C_5$ of colour-temperature state B, in which the output interface $O_{36}$ of R control signal in R control circuit $C_3$ the output interface $O_{47}$ of G control signal in the G control circuit $C_4$ and the output interface $O_{58}$ of B control signal in the B control circuit $C_5$ are separately connected with the input interface $I_{56}$ of R control signal in the automatic adjusting circuit $C_6$ of colour-temperature state R, the input interface $I_{47}$ of G control signal in the automatic adjusting circuit $C_7$ of colour-temperature state G, and the input interface $I_{58}$ of B control signal in the automatic adjusting circuit $C_8$ of color-temperature state B, wherein an interface $O_{80}$ adjusting the channel of color-temperature R, which will be connected with a channel circuit $C_0$ to be modulated, is installed in the previous R automatic adusting circuit $C_6$, an interface $O_{70}$ of the automatic adjusting channel of colour-temperature state G, which will be connected with the channel of colour-temperature state G, which will be connected with the channel circuit Co to be modulated, is installed in the previous G automatic adjusting circuit $C_7$, and an interface $O_{80}$ adjusting the channel of colour-temperature state B, which will also be connected with the channel circuit Co to be modulated, is installed in the previous B automatic adjusting circuit $C_8$, and furthermore, an input interface $I_{02}$ of chrominance or brightness signal is installed in the sample circuit $C_2$ of colour-temperature adjusting origin level, in which an output interface $O_{26}$ of adjusting origin level R, an output interface $O_{24}$ of adjusting origin level G and an output interface $O_{25}$ of adjusting origin level B in the sample circuit $C_2$ are separately connected with an input interface $I_{26}$ of adjusting origin level R in the previous R automatic adjusting circuit $C_6$, an input interface $I_{27}$ of adjusting origin level G in the previous G automatic adjusting circuit $C_7$ and an input interface $I_{28}$ of adjusting origin level B in the previous B automatic adjusting circuit $C_8$ as well as are separately connected with an input interface $I_{23}$ of adjusting origin level R in the previous R control circuit $C_3$, an input interface $I_{24}$ of adjusting origin level G in the previous G control circuit $C_4$, and an input interface $I_{25}$ of adjusting origin level B in the previous B control circuit $C_5$.

3. An apparatus according to claim 2 is characterized in that:

Upon condition that circuits $C_4$ and $C_7$ as well as the input interfaces $I_{26}$ and $I_{28}$ of the adjusting origin levels R and B can be neglected, and when the adopted bottom colour-temperature standard $D_L$ and the adopted top colour-temperature standard $D_H$ are separately set in the coninuous sections of 5400K-7900K or 6500k-7900K and 7900K-9300K or 7900K-10000K in Planckian locus band.

a. the circuit $C_1$ means: the positive pole of a voltage regulator diode $D_1$ is used as R input terminal $I'_{01}$ of chrominance signal input interface $I_{01}$, the negative pole of $D_1$ is used as the output interface $O_{13}$ of ident signal R of the colour-temperature region and is connected with an end of a resister $R_1$, the other end of $R_1$ is put to earth, the positive pole of a voltage regulator diode $D_3$ is used as G input terminal

$$I''_{01}$$

of chrominance signal input interface $I_{01}$, the negative pole of $D_3$ is connected with a non-central terminal of a potentiometer $W_2$, the other non-central terminal of $W_2$ is connected with an end of a potentiometer $R_7$, the center terminal of $W_2$ is connected with the positive pole of a diode $D_5$, the other end of $R_7$ is put to earth, the positive pole of a voltage regulator diode $D_2$ is used as B input terminal

$$O'''_{01}$$

of chrominance signal input interface $I_{01}$, the negative pole of $D_2$ is connected with an non-central

12

terminal of a potentiometer W , the other non-central terminal of $W_1$ is connected with a terminal of a resistor $R_6$, the centre terminal of $W_1$ is connected with the positive pole of a diode $D_4$, the other end of $R_6$ is put to earth, the terminal where the negative pole of $D_4$, is connected with the negative pole of $D_5$ is used as the output terminal $O_{15}$ of ident signal B of the colour-temperature region.

b. above circuit $C_2$ is compounded into above circuit $C_1$, i.e. the circuit $C_2$ consists of voltage regulator diodes $D_1$, $D_2$, $D_3$, potentiometers $W_1$, $W_2$, diodes $D_4$, $D_5$ and is in the same connection way from above circuit $C_1$, here, the positive poles of $D_1$, $D_2$ and $D_3$ are set as the R. G. B input terminals $I'_{02}$, $I_{02}''$ and

$$I'^{\,\,\prime}_{0\,2}{}'$$

of chrominance or luminance signal input interface $I_{02}$, and , the negative pole of $D_1'$ is set as the R output interface $O_{23}$ of adjusting origin level, the negative pole of $D_4$, is set as the B output interface $O_{25}$ of adjusting origin level.

4. An apparatus according to claim 2 is characterized in that:

On condition that circuit $C_4$ and $C_7$ as well as the input interfaces $I_{26}$ and $I_{28}$ of the adjusting origin levels R and B can be neglected, when the adopted bottom colour-temperature reference standard $D_L$ and the adopted top colour-temperature reference standard $D_H$ are separately set in the continuous sections of 5400K-7900or 6500K-7900K and 7900K-10000K in Planckian locus band, above control circuit $C_5$ of colour-temperature R means: the bases of two NPN transistor $BG_{11}$, $BG_{21}$ are connected to each other and used as the input interface $I_{13}$ of ident signal R of the colour-temperature region and the input interface $I_{23}$ of adjusting origin level R, the emitter of $BG_{11}$ is connected with the collector of a PNP transistor $BG_{12}$ and used as a terminal $O'_{36}$ of the output interface $O_{36}$ of R control signal as well, the colletor of $GB_{11}$ is connected with the base of $BG_{12}$ and the emitter of $BG_{12}$ is connected with the emitter of a PNP transistor $BG_{26}$ and used as the second terminal

$$O''_{36}$$

of the output interface $O_{36}$ as well, the base of $BG_{22}$ is connected with the collector of $GB_{21}$, the colletor of $BG_{22}$ is connected with the emitter of $BG_{21}$ and used as the third terminal

$$O'^{\,\,\prime}_{36}{}'$$

of the output interface $O_{36}$.

5. An apparatus according to claim 2, 3 and 4 is characterized in that:

On condition that circuits $C_4$ and $C_7$ as well as the input interfaces $I_{26}$ and $I_{28}$ of the adjusting origin levels R and B can be neglected, when the adopted bottom colour-temperature reference standard $D_L$ and the adopted top colour-temperature reference standard $D_H$ are seperately set in the continuous sections of 5400K-7900K or 6500-7900 and 7900K-9300K or 7900K-10000K in Planckian locus band, above control circuit $C_5$ of colour-temperature B means: the bases of two NPN transistor $BG_{31}$, $GB_{41}$ are connected to each other and used as the input interface $I_{15}$ of ident signal B of the colour-temperature region and the input interface $I_{25}$ of adjusting origin level B, the emitter of $BG_{31}$ is connected with the collector of PNP transistor BG and used as a terminal $O'_{58}$ of the output interface $O_{58}$ of B control signal as well, the collector of $BG_{31}$ is connected with the base of $BG_{32}$, the emitter of $BG_{32}$ is connected with +12V power source, the emitter of a PNP transistor $BG_{42}$ is used as the second terminal

$$O''_{58}$$

of the output interface $O_{58}$, the base of $BG_{42}$ is connected with the collector of $BG_{41}$, the collector of $BG_{42}$ is connected with the emitter of $BG_{41}$ and used as the third terminal

$$O_{58}^{'''}$$

of the output interface $O_{58}$ When the primary colour driver matrix circuit is corrected, it is used as Y input terminal.

6. An apparatus according to claim 2, 3, 4 and 5 is characterized in that:

On condition that circuits $C_4$ and $C_7$ as well as the input interfaces $I_{26}$ and $I_{28}$ of the adjusting origin levels R and B can be neglected, when the adopted bottom colour-temperature reference standard $D_L$ and the adopted top colour-temperature reference standard $D_H$ are separately set in the continuous sections of 5400K-7900K or 6500K-7900K and 7900K-9300K or 7900K-10000K in Planckian locus band.

a. above automatic adusting circuit $C_6$ of colour-temperature state R means: a terminal of a resistor $R_4$ is used as a teminal $I_{36}'$ of the input interface $I_{36}$ of R control signal, the other terminal of the $R_4$ is put to earth, a terminal of a risistor $R_2$ is used as the second teminal

$$I_{36}''$$

of the input interface $I_{36}$, the other terminal of the $R_2$ is used as the B automatic adjusting channel interface $O_{60}$ of colour-temperature state, the second terminal

$$O_{36}''$$

is also connected with the first terminal $I_{01}'$ of the input interface $I_{01}$ in the previous sample circuit $C_1$, a terminal of a resistor $R_5$ is used as the third terminal

$$I_{36}'''$$

of the input interface $I_{36}$, the other end of $R_5$ is put to earth.

b. above automatic adjusting circuit $C_8$ of colour-temperature state B means: the terminal, which has been used as $I_{36}'$ and is from the same resistor $R_4$ in the above circuit $C_6$ is also used as a terminal $I_{58}'$ of the input interface $I_{58}$ of B control signal, the other terminal of $R_4$ is put to earth, a terminal of a risistor $R_5$ is used as the second terminal $I_8'$ of input interface $I_8$ the other terminal of $R_5$ is used as the B automatic adjusting channel interface $O_{80}$ of colour-temperature state and is also connected with the third terminal

$$I_{01}'''$$

of the input interface $I_{01}$ in the previous sample circuit $C_1$ the terminal, which has been used as

$$I_{36}'''$$

and is from the same resistor $R_5$ in above circuit $C_6$ is also used as the third terminal

$$I_{58}'''$$

of input interface $I_{58}$ the other terminal of the $R_5$ is put to earth,

C, first terminal $I_{01}'$ ---that is the interface $O_{60}$ and the first teminal $I_{02}'$ of the interface $I_{02}$, the second terminal

$$I_{oi}''$$

---that is the second terminal $I_{02}'$ of interface $I_{02}$ and the third terminal

$$I_{oi}'''$$

---that is the interface $O_{80}$ and the third terminal

$$I_{02}'''$$

of the interface $I_{02}$ of above adjuster interface $I_{01}$ are separately connected with the final-stage transistor emitters of the R, G, B matrix circuits of a adjusted receiver, a positive 12V power source and the earthed terminal are separately connected with the +12V terminal of the decoding matrix circuits and the earthed terminal of the adjusted receiver.

$O_{O2}$  $O_{O1}$

$I_{60}$  $I_{70}$  $I_{80}$

$I_{O1}$

$I_{13}$

the control circuit C$_3$
of colour-tempera-
ture state R

$I_{36}$
$O_{36}$

automatic correcting
circuit C$_6$ of colour-
temperature state R

$O_{60}$

$I_{23}$

$I_{26}$

the ident signal
sample circuit C$_1$
of the corresponding
relation between hue
and colour-temperature

$O_{13}$
$I_{14}$
$O_{14}$
$O_{15}$

the control circuit C$_4$
of colour-tempera-
ture state G

$O_{47}$  $I_{47}$

automatic correcting
circuit C$_7$ of colour-
temperature state G

$O_{70}$

$I_{24}$

$I_{27}$

$I_{02}$

$I_{15}$

the control circuit C$_5$
of colour-tempera-
ture state B

$O_{58}$  $I_{58}$

automatic correcting
circuit C$_8$ of colour-
temperature state B

$O_{80}$

$I_{28}$

the sample circuit C$_2$
of colour-tempera-
ture correcting origin
level

$O_{13}$

$I_{25}$

$O_{24}$

$O_{25}$

Fig. 1

EP 0 475 320 A2

Fig.2

final-stage transistor of B matrix circuit

final-stage transistor of G matrix circuit

final-stage transistor of R matrix circuit

decoding matrix circuit $C_o$ of a colour TV receiver

EP 0 475 320 A2

Fig.3

EP 0 475 320 A2

the final-stage transistor of B matrix circuit

the final-stage transistor of G matrix circuit

the final-stage transistor of R matrix circuit

decoding matrix circuit $C_0$ of a colour TV receiver

Fig. 4

EP 0 475 320 A2